(19) Europäisches Patentamt
European Patent Office
Office européen des brevets

(11) **EP 2 345 250 B1**

(12) **FASCICULE DE BREVET EUROPEEN**

(45) Date de publication et mention
de la délivrance du brevet:
**23.01.2013 Bulletin 2013/04**

(21) Numéro de dépôt: **09783993.0**

(22) Date de dépôt: **13.10.2009**

(51) Int Cl.:
*H04H 20/67* (2008.01)   *H04N 21/236* (2011.01)
*H04N 21/238* (2011.01)   *H04N 21/438* (2011.01)
*H04N 21/434* (2011.01)   *H04N 21/2383* (2011.01)

(86) Numéro de dépôt international:
**PCT/EP2009/063375**

(87) Numéro de publication internationale:
**WO 2010/043634 (22.04.2010 Gazette 2010/16)**

(54) **MODIFICATION DU DEBIT D'UN FLUX DE DONNEES DIFFUSE DANS UN RESEAU MONOFREQUENCE**

VERÄNDERUNG DER DATENRATE EINES RUNDFUNKSTROMES IN EINEM GLEICHWELLENNETZ

MODIFICATION OF THE THROUGHPUT OF A DATA STREAM BROADCAST IN A MONOFREQUENCY NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.10.2008 FR 0857076**

(43) Date de publication de la demande:
**20.07.2011 Bulletin 2011/29**

(73) Titulaire: **TDF**
**92541 Montrouge Cedex (FR)**

(72) Inventeur: **DUPAIN, Pascal**
**F-35131 Pont Pean (FR)**

(74) Mandataire: **Le Noane, Karine**
**Cabinet Vidon**
**Technopôle Atalante**
**16B, rue de Jouanet**
**35703 Rennes Cedex 7 (FR)**

(56) Documents cités:
**DE-A1- 10 139 069        FR-A- 2 902 591**
**US-A1- 2004 008 736     US-A1- 2007 076 764**

• **CHENG L ET AL: "DESIGN AND IMPLEMENTATION OF TRANSPORT STREAM REMULTIPLEXER WITH CASCADE ARCHITECTURE" IEEE TRANSACTIONS ON CONSUMER ELECTRONICS, IEEE SERVICE CENTER, NEW YORK, NY, US, vol. 49, no. 2, 1 mai 2003 (2003-05-01), pages 447-452, XP001171309 ISSN: 0098-3063**

**Description**

## 1. DOMAINE DE L'INVENTION

Le domaine de l'invention est celui de la transmission et de la diffusion d'informations numériques.

Plus précisément, l'invention concerne une technique de modification du débit d'un flux de données numériques.

L'invention s'applique notamment, mais non exclusivement, à un flux de données numériques conforme à l'une des normes de radiodiffusion suivantes : DVB-T (« Digital Video Broadcasting - Terrestrial » en anglais, pour « diffusion vidéo numérique terrestre »), DVB-H (« Digital Video Broadcasting - Handheld » en anglais, pour « diffusion vidéo numérique - portable), DVB-SH (« Digital Video Broadcasting - Satellite services to Handhelds » en anglais, pour « diffusion vidéo numérique - services par satellite pour portables »), DTMB (« Digital Terrestrial Multimedia Broadcast » en anglais, pour «diffusion multimédia numérique terrestre »), CMMB (« China Multimedia Mobile Broadcasting » en anglais, pour « diffusion multimédia pour mobile en Chine), etc.

Dans un mode de réalisation préférentiel, mais non exclusif, cette technique de modification du débit d'un flux s'inscrit dans le contexte de la norme ISO/IEC 13818-1 1 relative aux multiplex MPEG-TS ("Motion Picture Expert Group - Transport Stream" en anglais) et aux réseaux SFN ("Single Frequency Network" en anglais, pour "réseau à fréquence unique").

## 2. ARRIÈRE-PLAN TECHNOLOGIQUE

On s'attache plus particulièrement dans la suite de ce document à décrire la problématique existante dans le domaine des réseaux de diffusion de télévision numérique terrestre, à laquelle ont été confrontés les inventeurs de la présente demande de brevet. L'invention ne se limite bien sûr pas à ce domaine particulier d'application, mais présente un intérêt pour toute technique de transmission ou de diffusion d'informations devant faire face à une problématique proche ou similaire.

Des réseaux de diffusion de télévision numérique terrestre (encore appelée TNT), mettant en oeuvre la norme DVB-T, sont aujourd'hui déployés en France, en Europe, et dans plusieurs autres Etats du monde. Dans la grande majorité, ces réseaux sont de type MFN (« Multi Frequency Network » en anglais, pour « réseau multi fréquences »), ce qui signifie que les différents émetteurs d'un tel réseau fonctionnent à des fréquences distinctes. A l'inverse, dans certaines zones géographiques, les réseaux sont de type SFN (« Single Frequency Network » en anglais, pour « réseau à fréquence unique » ; on parle aussi de réseau isochrone), ce qui signifie que les différents émetteurs doivent être synchronisés en temps et en fréquence.

En effet, le principe de fonctionnement de tels réseaux SFN peut consister à émettre un même signal depuis au moins deux sites géographiques distincts sur chacun desquels est implanté un émetteur. L'objectif recherché est alors d'additionner la contribution de ces deux signaux en réception, ce qui nécessite qu'ils soient reçus au même instant, dans un intervalle de garde qui est fonction du profil de modulation et proportionnel à la largeur du temps symbole, et à la même fréquence, pour éviter qu'ils ne se perturbent l'un l'autre. En fonction de l'éloignement géographique du récepteur à chacun des deux émetteurs, il est donc parfois nécessaire de tenir compte des temps de trajets différents des signaux, et plus généralement du canal de propagation et des perturbations qu'il est susceptible d'introduire.

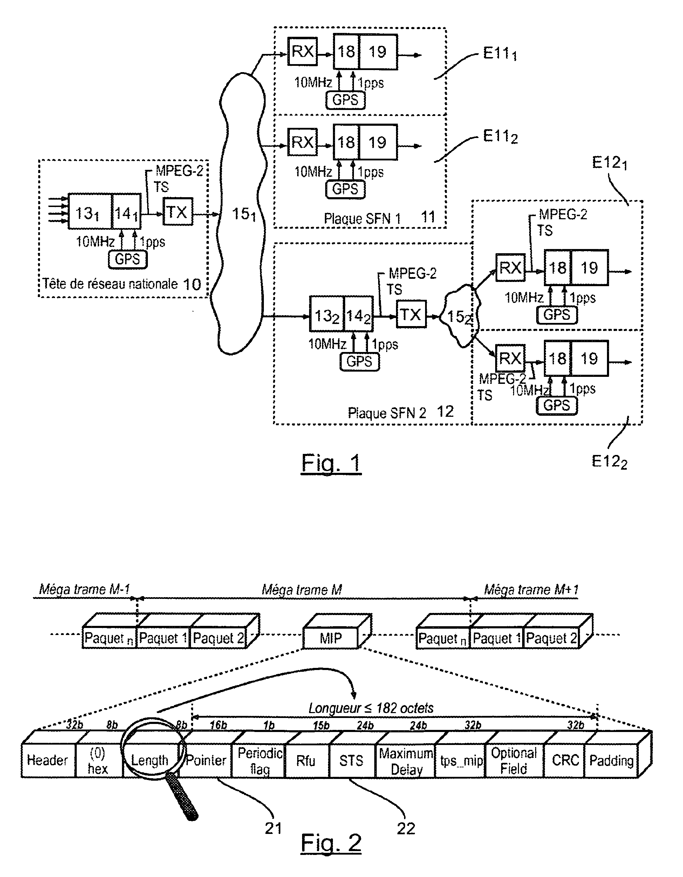

Dans un réseau SFN, tel qu'illustré par exemple par la **figure 1,** avec une tête de réseau nationale 10 et des plaques SFN1 11 et SFN2 12, les émetteurs E111, E112 (plaque SFN1), E121 et E122 (plaque SFN2) de chaque plaque sont synchrones aux niveaux temporel et fréquentiel, ce qui signifie qu'ils doivent émettre un même signal modulé au même instant. Par exemple, ce signal modulé peut être un signal numérique formaté selon la norme 13818-1, appelé MPEG-TS.

Dans la tête de réseau nationale 10, le flux MPEG-TS de données à transmettre est construit par un multiplexeur $13_1$, qui réalise la mise en trame des données. Après multiplexage, les données sont traitées par un adaptateur SFN $14_1$, qui réalise le marquage temporel des trames pour assurer la synchronisation des émetteurs. L'adaptateur SFN $14_1$ est le pendant, dans la tête de réseau nationale 10, de l'équipement de synchronisation 18 compris dans chaque plaque SFN 11 ou 12. En sortie de l'adaptateur SFN $14_1$, le flux de données est donc de type MPEG-TS : il est alors transmis par un adaptateur réseau TX (« TX Network Adapter » en anglais), et véhiculé, par l'intermédiaire d'un réseau de distribution $15_1$ (par exemple un réseau de distribution par satellite), jusqu'aux plaques SFN 11 ou 12.

Plus précisément, le marquage temporel réalisé par l'adaptateur SFN 14, consiste (voir la norme ETSI TS 101 191):

- d'une part, à construire des méga-trames (encore appelées super-trames), correspondant chacune à 8 trames DVB-T en mode 8K, ou à 32 trames DVB-T en mode 2K, et
- d'autre part, à insérer en un endroit quelconque de chacune de ces méga-trames, un paquet d'initialisation de méga-trame, encore appelé paquet MIP (pour « Mega-frame Initialisation Packet » en anglais).

Le terme « méga-trame » désigne par la suite un regroupement de plusieurs trames. Le terme « méga-trame » est par exemple employé dans les normes DVB-T, DVB-H, DAB+...

Le paquet MIP de la méga-trame d'indice M, noté $MIP_M$, est identifié par son propre PID=0x 15 (pour « Packet Identifier » en anglais, soit « identifiant de paquet ») et comprend notamment (comme illustré sur la **figure 2) :**

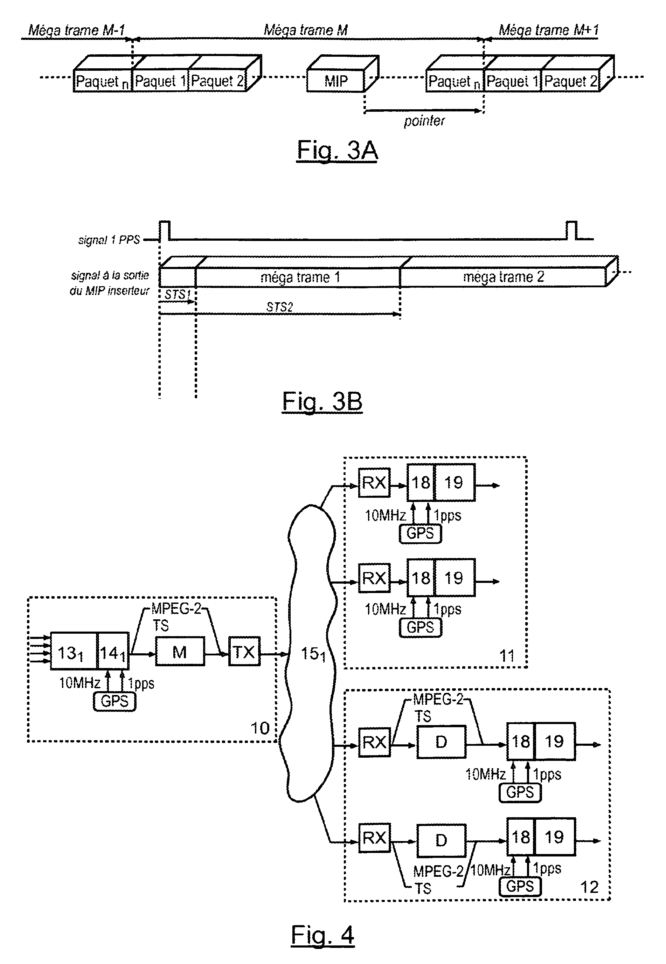

- un mot de deux octets appelé « pointer » 21, qui donne le nombre de paquets de données entre le paquet MIP courant et le premier paquet de la méga-trame suivante (comme illustré sur la **figure 3A) ;**
- un mot de trois octets appelé « Synchronisation_time_stamp » (ou STS) 22, qui donne le nombre de périodes de 10 MHz entre la dernière impulsion 1 PPS de référence précédant le début de la méga-trame suivante d'indice M+1 et le début de cette méga-trame suivante d'indice M+1 (ce début étant identifié par le premier bit du premier paquet de cette méga-trame suivante) (comme illustré sur la **figure 3B).**

La technique actuelle pour assurer la synchronisation des émetteurs dans un tel réseau SFN repose sur des dispositifs de mesure temporelle différentielle de signaux, permettant de mesurer l'écart entre les signaux des différents émetteurs, et de vérifier la stabilité du réseau, après qu'il ait été correctement réglé (en absolu).

Dans les plaques SFN, les données à diffuser par chacun des émetteurs sont reçues sous la forme d'un flux de transport de type MPEG-TS, issu d'un récepteur RX jouant également le rôle d'adaptateur de réseau (« RX Network Adapter »). La synchronisation des signaux du réseau SFN, en sortie des modulateurs 19 de chaque émetteur E1 11, E112, E121 et E122, est réalisée à partir de tables prédéterminées, dites tables MIP, par un équipement de synchronisation 18, permettant aux différents modulateurs 19 de réaligner les trames constituant lesdits signaux par rapport à une même référence externe unique, pouvant être n'importe quelle référence de fréquence commune disponible, par exemple de type GPS (« Global Positioning System » en anglais). A cet effet, l'adaptateur SFN $14_1$, ainsi que l'équipement de synchronisation 18 de chaque émetteur, sont chacun alimentés par deux signaux de référence fréquentielle et temporelle, par exemple un signal correspondant à une impulsion par seconde (ou « 1 PPS », pour « 1 Pulse Per Second » en anglais) et un signal à 10MHz résultant du 1 PPS. Ces signaux peuvent être issus de tout système de référence fiable, et par exemple du système de positionnement mondial GPS.

La modification de certaines caractéristiques de modulation dans une plaque SFN particulière nécessite une modification de l'architecture de la plaque SFN d'origine, pour pouvoir conserver un réseau SFN. Cette modification fondamentale de la plaque SFN nécessite de remultiplexer (avec un multiplexeur $13_2$) le flux MPEG-TS après modification de la modulation, puis de repasser ce flux multiplexé au travers d'un adaptateur SFN $14_2$ afin de remplacer les paquets MIP (qui ne sont plus valables après remultiplexage du flux) et enfin d'ajouter un autre noeud $15_2$ qui redistribue à chacun des émetteurs le nouveau signal dans lequel une ou plusieurs caractéristiques de modulation ont été modifiées.

Dans la figure 1, la plaque SFN1 11 illustre un exemple d'architecture de plaque SFN d'origine, et la plaque SFN2 12 illustre un exemple d'architecture de plaque SFN après modification.

Un inconvénient majeur de cette première technique de l'art antérieur est qu'elle entraîne une forte augmentation de la complexité et du coût de diffusion, en raison notamment de l'ajout d'un multiplexeur $13_2$, d'un adaptateur SFN $14_2$ et d'un noeud de redistribution $15_2$.

Il est également à noter que le document US 2007 /0076764 A1 décrit un procédé de modification du débit d'un flux de données d'origine organisé en paquets successifs dans lequel des paquets de bourrages sont détectés à partir de l'identifiant PID=IFFF dans les en-têtes d'un flux MPEG2-TS.

En outre, le document US 2004 / 0008736 décrit un procédé de remplacement de paquets de bourrage non périodiques par des paquets de bourrage périodiques de manière à simplifier la détection des paquets de bourrage dans un flux MPEG2-TS.

## 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant de modifier le débit d'un flux de données numériques (par exemple un flux MPEG-TS standard).

Un objectif complémentaire d'au moins un mode de réalisation de l'invention est de fournir une telle technique permettant une modification du débit déterministe, pouvant ainsi être utilisée en environnement SFN.

Au moins un mode de réalisation de l'invention a également pour objectif de fournir une telle technique de modification de débit basée sur des éléments non propriétaires et permettant une implémentation peu coûteuse.

Un autre objectif d'au moins un mode de réalisation de l'invention est de fournir une telle technique d'horodatage pouvant fonctionner dans un contexte de modification du débit d'un flux destiné à un réseau SFN, pour alimenter un autre réseau SFN.

Un objectif complémentaire d'au moins un mode de réalisation de l'invention est de fournir une telle technique de modification de débit permettant, dans le contexte précité, au flux modifié de rester conforme au standard de diffusion dans lequel il se trouve avant l'opération de modification de débit (par exemple DVB-T, DVB-H, DVB-SH, DTMB, CMMB, ou toute autre norme de télédiffusion basée sur l'utilisation du flux MPEG-TS).

Encore un objectif d'au moins un mode de réalisation de l'invention est de fournir une telle technique de modification du débit garantissant la conformité des marqueurs PCR (pour « Program Clock Reference » en anglais).

Un objectif complémentaire d'au moins un mode de réalisation de l'invention est de fournir une telle technique de modification de débit, dans le contexte précité, sans référence externe (GPS ou autre).

## 4. EXPOSÉ DE L'INVENTION

Dans un mode de réalisation particulier de l'invention, il est proposé un procédé de modification du débit d'un flux de données d'origine organisé en paquets successifs.

Selon l'invention, un tel procédé comprend les étapes suivantes :

- recherche d'au moins un marqueur présent dans ledit flux de données d'origine ;
- extraction d'au moins une information d'instant de début de récurrence portée par ledit marqueur ;
- détermination, pour chacun desdits paquets dudit flux de données d'origine, d'une information d'horodatage ;
- détermination, à partir de ladite information d'instant de début de récurrence et d'au moins une desdites informations d'horodatage, d'un paquet de début de récurrence dans ledit flux de données d'origine ;
- modification dudit flux de données d'origine par insertion ou suppression d'au moins un paquet déterminé à partir dudit paquet de début de récurrence déterminé, délivrant un flux de données modifié.

Ainsi, dans ce mode de réalisation particulier, l'invention repose sur une approche tout à fait nouvelle et inventive de changement de débit d'un flux, consistant à utiliser des informations transmises dans un paquet particulier, appelé « marqueur », inséré dans le flux d'origine et des informations d'horodatage calculées pour le flux d'origine.

La corrélation de ces informations permet de déterminer un paquet de début de récurrence pour les modifications nécessaires au changement de débit du flux d'origine, c'est-à-dire l'insertion ou la suppression de paquets de manière déterministe et récurrente.

Avantageusement, ladite étape d'extraction délivre également une information de récurrence de modification et/ou un nombre de paquets à retirer ou à insérer portée par ledit marqueur.

De cette façon, les calculs nécessaires à l'obtention du paquet de début de récurrence sont simplifiés par l'utilisation de ces informations pouvant également être transmises via le marqueur. Par exemple, si le marqueur porte une information de récurrence de modification, il ne reste à calculer que le nombre de paquets à insérer ou supprimer. Si cette information est également transmise via le marqueur, alors seul le paquet de début de récurrence est à déterminer, à l'aide notamment des informations d'horodatage.

Selon une caractéristique avantageuse, ladite étape de modification dudit flux de données d'origine consiste à insérer ou à supprimer un nombre de paquets égal audit nombre de paquets à retirer ou à insérer délivré par ladite étape d'extraction.

Selon un mode de réalisation particulier de l'invention, ladite étape de modification dudit flux de données d'origine est mise en oeuvre un nombre de fois égal à ladite information de récurrence de modification délivrée par ladite étape d'extraction.

Avantageusement, ledit marqueur est un paquet identifié par un identifiant (PID) de type propriétaire.

Ce mode de réalisation permet de ne pas modifier la signalisation du flux d'origine en insérant un marqueur de PID « non-signalé » ou propriétaire, et donc de ne pas perturber des utilisateurs du flux n'ayant pas de modification du débit du flux à effectuer.

Selon une caractéristique avantageuse, ledit flux de données modifié est un flux devant être diffusé par au moins un émetteur d'un réseau de diffusion de type SFN, dans lequel chacun desdits émetteurs utilise une même fréquence d'émission des données du flux de données modifié.

Ainsi, la technique proposée peut être mise en oeuvre dans un dispositif de modification de flux, pouvant également remplir la fonction d'horodatage, compris dans chaque émetteur.

Selon un mode de réalisation particulier, ledit flux de données modifié est conforme à une norme de radiodiffusion appartenant au groupe comprenant les normes DVB-T, DVB-H, DVB-SH, DTMB et CMMB.

Avantageusement, ladite étape d'extraction délivre également au moins une information portée par ledit marqueur appartenant au groupe comprenant :

- des caractéristiques de modulation ;
- un instant d'insertion d'un paquet d'initialisation de méga-trame (MIP) ;
- une valeur d'un champ (« continuity-counter ») d'un paquet d'initialisation de méga-trame (MIP).

Ainsi, le marqueur contient des informations supplémentaires permettant de faciliter la modification du flux au niveau de chaque émetteur.

Par exemple, les caractéristiques de modulation permettent de déterminer la durée des paquets, les récurrences des méga-trames, etc ...

On notera que plusieurs désignations existent pour les paquets d'initialisation de méga-trame, ou super-trame : paquets MIP dans les normes DVB-T, DVB-H et DVB-SH, paquets SHIP dans la norme DVB-SH, ou encore paquets SIP dans les normes DTMB et CMMB. Dans l'ensemble de la présente description, le terme « paquet MIP » doit être compris comme désignant de manière générique un paquet d'initialisation de méga-trame et englobe donc les autres désignations précitées (SHIP, SIP) ou toute autre désignation équivalente.

Selon une caractéristique avantageuse, lesdits paquets successifs dudit flux de données d'origine et dudit flux de données modifié étant eux-mêmes organisés en au moins une méga-trame, chaque méga-trame comprenant un paquet d'initialisation de méga-trame (MIP), caractérisé en ce qu'il comprend en outre les étapes suivantes :

- mise à jour ou détermination, pour chacun desdits paquets dudit flux de données modifié suivant ledit paquet de début de récurrence, d'une information d'horodatage ;
- génération d'un paquet d'initialisation de méga-trame (MIP) à partir d'au moins une desdites informations délivrées par ladite étape d'extraction ;
- insertion dudit paquet d'initialisation de méga-trame (MIP) généré dans ledit flux de données modifié, à partir d'au moins une desdites informations d'horodatage et de ladite information d'instant d'insertion délivré par ladite étape d'extraction.

Selon ce mode de réalisation, l'invention permet de générer des nouveaux paquets MIP pour le flux modifié, et de les insérer dans ce flux modifié, pour assurer la cohérence avec le nouveau débit et la nouvelle récurrence des méga-trames.

Pour ce faire, un horodatage des paquets du flux de données modifié doit être effectué, soit par une mise à jour de l'horodatage effectué sur le flux de données d'origine, soit par un nouvel horodatage dans les cas des paquets insérés et non présents dans le flux de données d'origine.

Selon un mode de réalisation particulier de l'invention, ladite étape de détermination d'une information d'horodatage comprend, pour chacun desdits paquets dudit flux de données d'origine, les étapes suivantes :

- détermination de la durée dudit paquet, à partir d'une taille déterminée dudit paquet et d'un débit déterminé dudit flux de données d'origine ;
- si ledit paquet est un paquet transportant une table de date et heure (table TDT), obtention d'une première information temporelle (UTC_time) contenue dans ladite table de date et heure (table TDT) ;
- si ledit paquet est un premier paquet d'une méga-trame, obtention d'une seconde information temporelle (STS) contenue dans un paquet d'initialisation de méga-trame (MIP) préalablement reçu ;
- horodatage dudit paquet en fonction de la durée dudit paquet et desdites première et seconde informations temporelles.

Avantageusement, ladite étape d'horodatage comprend les sous-étapes suivantes :

- incrémentation d'un premier compteur temporel, permettant de compter des fractions de seconde (SECOND_FRAC), avec la durée déterminée dudit paquet, pour obtenir une valeur incrémentée du premier compteur ;
- si ladite valeur incrémentée du premier compteur est supérieure ou égale à une valeur maximale prédéterminée, réinitialisation du premier compteur avec une nouvelle valeur courante égale à ladite valeur incrémentée moins ladite valeur maximale prédéterminée, et incrémentation d'une unité d'un second compteur temporel (SECOND_INT), permettant de compter des secondes ;
- si ledit paquet est un paquet transportant une table de date et heure (table TDT), réinitialisation du second compteur temporel à une nouvelle valeur courante fonction de ladite première information temporelle (UTC_time) contenue dans ladite table de date et heure ;
- si ledit paquet est un premier paquet d'une méga-trame, réinitialisation du premier compteur temporel à une nouvelle valeur courante fonction de ladite seconde information temporelle (STS) contenue dans ledit paquet d'initialisation de méga-trame (MIP) préalablement reçu ;
- détermination d'une information d'horodatage dudit paquet en fonction de la valeur courante des premier et second compteurs.

L'invention concerne également un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour la mise en oeuvre des étapes du procédé de modification du débit d'un flux décrit précédemment.

L'invention concerne aussi un dispositif de modification du débit d'un flux de données d'origine organisé en paquets successifs.

Selon l'invention, un tel dispositif comprend :

- des moyens de recherche d'au moins un marqueur présent dans ledit flux de données d'origine ;
- des moyens d'extraction d'au moins une information d'instant de début de récurrence portée par ledit marqueur ;
- des moyens de détermination, pour chacun desdits paquets dudit flux de données d'origine, d'une information d'horodatage ;
- des moyens de détermination, à partir de ladite information d'instant de début de récurrence et d'au moins une desdites informations d'horodatage, d'un paquet de début de récurrence dans ledit flux de données d'origine ;
- des moyens de modification dudit flux de données d'origine par insertion ou suppression d'au moins un paquet déterminé à partir dudit paquet de début de récurrence déterminé, délivrant un flux de données modifié.

Un tel dispositif selon l'invention est notamment apte à mettre en oeuvre le procédé de modification du débit d'un flux tel que décrit précédemment.

Un tel dispositif peut être un « transrater ».

L'invention concerne encore un procédé de diffusion d'un flux de données d'origine organisé en paquets successifs et comprenant au moins un marqueur.

Selon un mode de réalisation de l'invention, ledit marqueur porte au moins une information d'instant de début de récurrence.

Avantageusement, ledit marqueur porte une information de récurrence de modification et/ou un nombre de paquets à retirer ou à insérer.

Selon une caractéristique avantageuse, ledit marqueur porte également une information appartenant au groupe comprenant :

- des caractéristiques de modulation ;
- un instant d'insertion d'un paquet d'initialisation de méga-trame (MIP) ;
- une valeur d'un champ (« continuity-counter ») d'un paquet d'initialisation de méga-trame (MIP).

L'invention concerne également un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour la mise en oeuvre des étapes du procédé de diffusion d'un flux décrit précédemment.

L'invention concerne enfin un dispositif de diffusion d'un flux de données d'origine organisé en paquets successifs et comprenant au moins un marqueur, portant au moins une information d'instant de début de récurrence.

Un tel dispositif est notamment apte à mettre en oeuvre le procédé de diffusion d'un flux de données tel que décrit précédemment.

Un tel dispositif peut être par exemple une tête de réseau.

## 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1, déjà décrite en relation avec l'art antérieur, présente un réseau SFN selon une technique de l'art antérieur ;
- la figure 2, déjà décrite en relation avec l'art antérieur, illustre la structure des méga-trames et des paquets MIP ;
- la figure 3A, déjà décrite en relation avec l'art antérieur, explique la signification du champ « pointer » d'un paquet MIP ;
- la figure 3B, déjà décrite en relation avec l'art antérieur, explique la signification du champ « STS » d'un paquet MIP ;
- la figure 4 présente un réseau SFN selon un mode de réalisation de l'invention ;
- la figure 5 présente une machine d'état d'un procédé de modification de débit d'un flux selon un mode de réalisation particulier de l'invention ;
- la figure 6 présente une machine d'état de l'horodatage d'un flux selon un mode de réalisation particulier de l'invention ;
- la figure 7 présente un premier exemple de flux impliqués dans une modification de débit effectuée selon la machine d'état de la figure 5 ;

- la figure 8 présente un deuxième exemple de flux impliqués dans une modification de débit effectuée selon la machine d'état de la figure 5 ;
- la figure 9 présente la structure d'un dispositif d'horodatage et d'insertion selon un mode de réalisation particulier de l'invention.

Sur toutes les figures du présent document, les éléments et étapes identiques sont désignés par une même référence numérique.

## 6. DESCRIPTION DÉTAILLÉE

*6.1 Principe général*

Le principe général de l'invention repose sur l'insertion, à la source, d'un marqueur dans un flux de données d'origine et sur l'horodatage de ce flux afin de définir un instant de suppression ou d'insertion de paquet(s) pour modifier le débit du flux.

La modification du débit du flux d'origine consiste soit à insérer un ou plusieurs paquets de bourrage, de manière récurrente, dans le flux d'origine, soit à supprimer un ou plusieurs paquets de bourrage du flux d'origine, de manière récurrente également.

La période récurrente d'insertion ou de suppression varie en fonction de la modification du flux envisagée. L'équipement qui met en oeuvre la modification du débit du flux doit connaître le début de cette période récurrente, et ne peut pas forcément se baser sur des informations classiquement transportées par le flux, telles qu'une table de signalisation ou un paquet MIP par exemple. En effet, en fonction du nombre de paquets à supprimer ou à insérer, il se peut qu'on ne puisse pas se référer à des informations classiquement portées par le flux, pour déterminer le début de cette période récurrente.

Selon l'invention, le début de la période récurrente est donc indiqué via un marqueur inséré dans le flux.

*6.2 Description d'un mode de réalisation particulier de l'invention*

Plus précisément, l'invention est mise en oeuvre dans le cadre d'un réseau SFN, tel que déjà décrit en relation avec l'art antérieur et la figure 1, et comprenant notamment une tête de réseau et plusieurs plaques SFN.

Selon l'invention, l'insertion d'un marqueur à la source dans le flux de données d'origine permet aux équipements installés dans une plaque SFN (appelés « transrater » par la suite) de modifier le débit d'un flux de manière déterministe, après avoir recherché ce marqueur et en avoir extrait certaines informations, et horodaté le flux, et sans conséquence pour les autres plaques SFN utilisant le flux de données d'origine.

Ainsi, comme illustré en **figure 4,** un marqueur M est inséré dans le flux, au niveau de la tête de réseau 10. Ce marqueur est inséré sous la forme d'un paquet de PID propriétaire (« PID ghost » en anglais), de manière régulière à la place d'un paquet de bourrage.

Au niveau de la plaque SFN 12, le débit du flux d'origine reçu est modifié, par un ou des transraters, notés D sur la figure 4, avant les équipements de synchronisation 18.

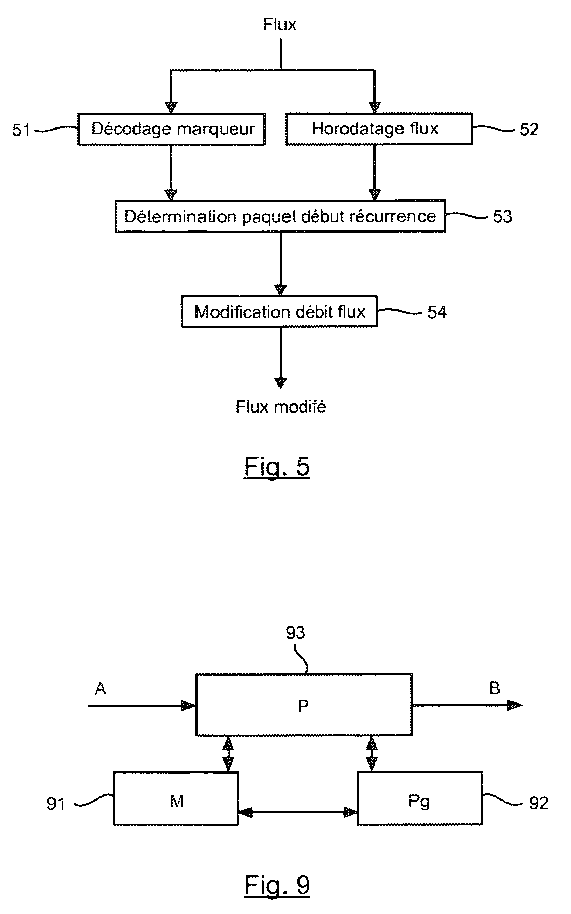

La **figure 5** présente une machine d'état d'un procédé de modification du débit d'un flux de données d'origine, selon un mode de réalisation particulier de l'invention. Cette machine d'état de la modification du débit d'un flux est par exemple mise en oeuvre dans un dispositif de modification de débit, ou transrater.

Dans une étape 51 de décodage, on recherche un marqueur, préalablement inséré dans le flux d'origine, et on en extrait des informations du type :

- instant de début de récurrence ;
- type de modulation ;
- instant d'insertion d'un paquet d'initialisation de méga-trame (MIP) ;
- valeur d'un champ (« continuity-counter ») d'un paquet d'initialisation de méga-trame (MIP).

Comme indiqué précédemment, ce marqueur est inséré régulièrement à la place d'un paquet de bourrage au niveau de la tête de réseau, sous la forme d'un paquet non signalé.

On présente en annexe 1, faisant partie intégrante de la présente description, un exemple de structure d'un tel paquet, dont l'en-tête est identique à un en-tête de paquet MIP, hormis la valeur du PID.

On note que le champ «TPS-MIP » donne les caractéristiques de modulation, comme la valeur de l'intervalle de garde, le type de modulation (QPSK, 16-QAM, 64-QAM ...), la valeur du FEC (pour « Forward Error Correction » en anglais), ...

Le champ « packet_time_recurrence » indique quant à lui le paquet du début de récurrence pour effectuer le changement de débit, c'est-à-dire pour insérer ou supprimer des paquets dans le flux d'origine.

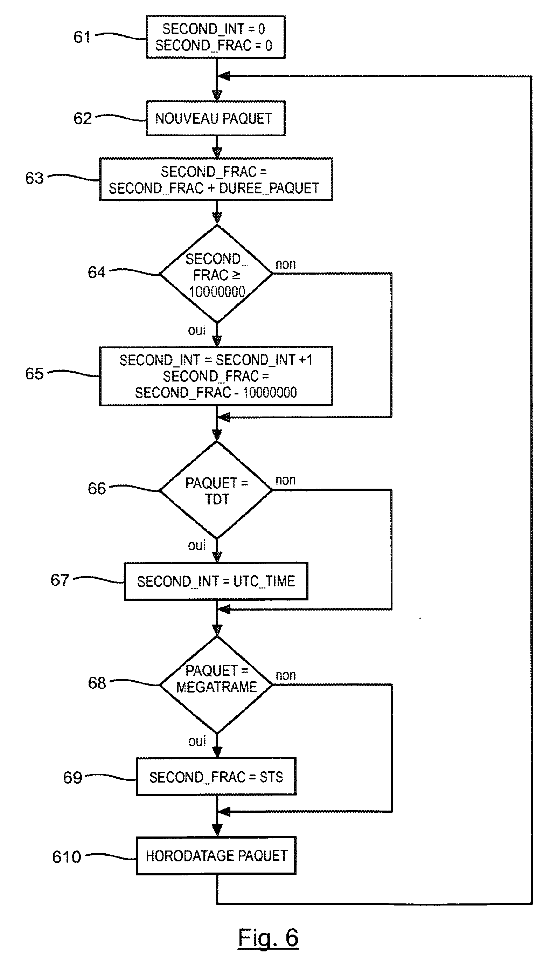

Dans une étape 52 de la figure 5, on lit les paquets P1...PN du flux principal et on obtient des informations d'horodatage I1...IN, par application de la machine d'état de l'horodatage au flux d'origine, décrite ci-dessous en relation avec la figure 6. On note H1...HN les heures indiquées par ces informations d'horodatage I1...IN (combinaison de la valeur du compteur de secondes SECOND_INT et de la valeur du compteur de fractions de seconde SECOND_FRAC).

Dans une étape 53, on détermine, à partir des informations corrélées des heures H1...HN et de l'indication de l'instant de début de récurrence, un paquet de début de récurrence dans le flux d'origine.

Enfin, lors d'une étape 54, on insère, ou on retire, un ou plusieurs paquets, à partir du paquet de début de récurrence déterminé à l'étape précédente 53, de façon à modifier le débit du flux de données d'origine, et à générer un flux de données sortant modifié.

Le calcul du débit d'un flux tient compte notamment des paramètres de modulation du flux. Le débit d'un flux peut donc s'exprimer de la manière suivante, en fonction de ces paramètres :

$$débit = \frac{9}{2176} * \frac{bande * modulation * FEC * taille\_paquet}{1 + intervalle\_de\_garde} \tag{1}$$

avec :

- *bande :* la bande passante du canal de transmission du flux, pouvant être de 5, 6, 7 ou 8 MHz ;
- *modulation :* le nombre de bits par porteuse (par exemple 2 bits par porteuse pour une modulation de type QPSK, 4 bits par porteuse pour une modulation de type 16-QAM, 6 bits par porteuse pour une modulation de type 64-QAM, ...) ;
- *FEC :* le rapport donnant le nombre de bits utiles par le nombre de bits transmis ;
- *taille_paquet :* 188 ou 204 octets ;
- *intervalle_de_garde:* la valeur de l'intervalle de garde (1/4, 1/8, 1/16, 1/32, ...).

La récurrence d'insertion, ou de suppression, de paquets, est donnée par la formule suivante, en fonction du débit d'origine *(débit_supérieur* ou *débit_inférieur)* et du débit modifié *(débit_supérieur* ou *débit_inférieur) :*

$$récurrence = \frac{débit\_supérieur - débit\_inférieur}{débit\_inférieur} \tag{2}$$

L'annexe 2, faisant partie intégrante de la présente description, présente un exemple de tableau permettant de déterminer la récurrence et le nombre de paquets à insérer ou à retirer en fonction de la récurrence, pour un flux d'origine utilisé pour une modulation 64-QAM, avec un intervalle de garde de valeur 1/32, pour une bande passante de 8 MHz et des paquets de 204 octets.

Les résultats du type fraction [i/j] (9/11, 1/32 ...) indiquent directement un nombre de paquets i à insérer tous les j paquets.

Par exemple, pour la conversion d'un débit de 26,181818 Mbps (flux source avec un FEC de 2/3) vers un débit de 27 Mbps, on obtient [1/32], c'est à dire qu'il faut insérer 1 paquet tous les 32 paquets.

Les résultats du type [k i/j] indiquent un nombre de paquets (k*j + i) à insérer tous les j paquets.

Par exemple, pour la conversion d'un débit de 19,63 Mbps (flux source avec FEC de ½) vers un débit de 5,4 Mbps, on obtient [2 7/11], c'est à dire qu'il faut supprimer (2*11 + 7) = 29 paquets tous les (29 + 11) = 40 paquets, la conversion de débit inverse (5,4 Mbps vers 19,63 Mbps) consiste à insérer 29 paquets par période de 11 paquets.

Ce tableau de conversion, ainsi que des tableaux correspondants pour des flux d'origine ayant d'autres caractéristiques, sont connus des transraters du système, et leur permettent ainsi d'effectuer des modifications de débit de flux, en fonction des informations transmises par le marqueur inséré à la source dans le flux d'origine.

Selon une variante de l'invention, pour alléger les mémoires des transraters de ces tableaux de conversion, le marqueur porte aussi des informations indiquant la récurrence et le nombre de paquets à insérer ou à supprimer.

Une fois le débit du flux d'origine modifié, à partir des informations du marqueur et éventuellement des tableaux de conversion pré-cités, se pose la question des paquets MIP du flux d'origine, qui indiquent notamment le nombre de paquets de données entre le paquet MIP courant et le premier paquet de la méga-trame suivante.

En effet, la durée de la méga-trame pour le flux modifié est différente de la durée de la méga-trame pour le flux d'origine, cette durée dépendant de certaines caractéristiques de modulation (la valeur de l'intervalle de garde et la valeur de la bande passante) qui peuvent changer avec la modification du débit.

Les transraters doivent donc supprimer les paquets MIP du flux d'origine et générer de nouveaux paquets MIP, à partir notamment d'informations portées par le marqueur, et d'un horodatage du flux modifié.

Les informations portées par le marqueur, corrélées avec un horodatage du flux modifié, permettent notamment de déterminer le début d'une nouvelle méga-trame, en fonction des nouvelles caractéristiques de modulation du flux modifié.

Par exemple, comme décrit en annexe 1, le marqueur porte le champ « MIP_time_insertion », qui indique l'heure d'insertion du paquet MIP dans le flux modifié.

L'annexe 3, faisant partie intégrante de la présente description, présente un tableau des récurrences des méga-trames selon la norme ETSI TS 101 191.

L'annexe 4, faisant partie intégrante de la présente description, présente quant à elle un tableau des récurrences, en paquet, des méga-trames, selon un débit choisi, pour des paquets de 204 octets et une bande passante de 8 MHz.

Ce tableau montre que les valeurs de récurrence des méga-trames ne sont pas des valeurs entières lorsque l'intervalle de garde du flux modifié est différent de celui du flux d'origine. Ces cas particuliers rendent difficiles l'insertion des nouveaux paquets MIP.

Pour pouvoir générer des nouveaux paquets MIP au niveau des transraters, après modification du débit du flux, le marqueur inséré à la source contient donc les informations suivantes :

- type de modulation ;
- instant d'insertion du nouveau paquet MIP.

De plus, les paquets MIP générés et insérés étant des paquets de données utiles, il est nécessaire de préciser la valeur du champ « MIP_continuity_counter » de l'en-tête du paquet marqueur, de façon à ce que tous les transraters utilisent cette même valeur dans l'en-tête du paquet MIP.

La **figure 6** présente une machine d'état d'un procédé d'horodatage d'un flux selon un mode de réalisation particulier de l'invention. Comme indiqué précédemment, cette machine d'état de l'horodatage est par exemple appliquée d'une part au flux d'origine, afin de permettre la modification du flux d'origine, et d'autre part au flux modifié, afin de permettre l'insertion des nouveaux paquets MIP générés dans le flux modifié. Cette machine d'état de l'horodatage est par exemple mise en oeuvre dans un dispositif de modification de débit de flux ou transrater.

On utilise deux compteurs temporels :

- le compteur SECOND_INT, permettant de compter des secondes ; et
- le compteur SECOND_FRAC, permettant de compter des fractions de seconde. Il est incrémenté au rythme d'une horloge à 10 MHz, de façon à compter des dixièmes de microseconde (ce qui correspond à la granularité avec laquelle le champ STS d'un paquet MIP indique la position en temps du premier paquet de la prochaine méga-trame par rapport à la dernière impulsion 1 PPS de référence précédant le début de cette prochaine méga-trame), avec une valeur maximale égale à $10^7$.

Dans une étape 61, on initialise les compteurs SECOND_INT et SECOND_FRAC à zéro.

Dans une étape 62, on reçoit un nouveau paquet et on détermine sa durée, à partir d'une taille déterminée de ce paquet et d'un débit déterminé du flux considéré (durée paquet = taille paquet / débit).

La taille du paquet est obtenue via le récepteur.

Le débit du flux peut être donné directement par l'exploitant, ou peut être calculé à partir des informations (tps_mip) contenues dans un paquet d'initialisation de méga-trame (MIP) préalablement reçu, selon la formule suivante :

$$débit = \frac{9}{2176} * \frac{bande * modulation * FEC * taille\_paquet}{1 + intervalle\_de\_garde}$$

avec :

- *bande :* la bande passante du canal de transmission du flux, pouvant être de 5, 6, 7 ou 8 MHz;
- *modulation:* le nombre de bits par porteuse (par exemple 2 bits par porteuse pour une modulation de type QPSK, 4 bits par porteuse pour une modulation de type 16-QAM, 6 bits par porteuse pour une modulation de type 64-QAM, ...) ;
- *FEC :* le rapport donnant le nombre de bits utiles par le nombre de bits transmis ;
- *taille_paquet :* 188 ou 204 octets ;

- *intervalle_de_garde:* la valeur de l'intervalle de garde (1/4, 1/8, 1/16, 1/32, ...).

Dans une étape 63, on incrémente le compteur SECOND_FRAC, avec la durée déterminée du paquet, pour obtenir une valeur incrémentée du compteur SECOND_FRAC.

Dans l'étape 64, on détecte si la valeur incrémentée du compteur SECOND_FRAC est supérieure ou égale à la valeur maximale $10^7$.

En cas de détection négative à l'étape 64, on passe directement à l'étape 66. En cas de détection positive à l'étape 64, on passe à l'étape 65 dans laquelle on réinitialise le compteur SECOND_FRAC avec une nouvelle valeur courante égale à la valeur incrémentée moins la valeur maximale $10^7$. En outre, on incrémente d'une unité le compteur SECOND_INT. Puis on passe à l'étape 66.

Dans l'étape 66, on détecte si le paquet est un paquet transportant une table de date et heure (table TDT). La table TDT est extraite à partir de son identifiant de paquet (PID, pour « Packet Identifier » en anglais) égal à 0x14 en hexadécimal et de son identifiant de table (table_id) égal à 0x70 en hexadécimal. Cette table TDT contient un champ nommé UTC_time sur 5 octets qui précise la date calendaire (2 octets), ainsi que l'heure (1 octet), les minutes (1 octets) et les secondes (1 octet).

En cas de détection négative à l'étape 66, on passe directement à l'étape 68. En cas de détection positive à l'étape 66, on passe à l'étape 67 dans laquelle on réinitialise le compteur SECOND_INT à une nouvelle valeur courante fonction de l'information temporelle contenue dans le champ UTC_time de la table TDT. Puis on passe à l'étape 68.

Dans l'étape 68, on détecte si le paquet est un premier paquet d'une méga-trame. Cette détection est possible grâce à la détection préalable d'un paquet MIP (les paquets MIP sont détectés en filtrant les paquets avec l'identifiant PID égal à 0x15 en hexadécimal) et la lecture du contenu des champs Pointer et STS de ce paquet MIP. C'est le contenu du champ Pointer qui permet de savoir quand arrivera le prochain premier paquet d'une méga-trame.

En cas de détection négative à l'étape 68, on passe directement à l'étape 610. En cas de détection positive à l'étape 68, on passe à l'étape 69 dans laquelle on réinitialise le compteur SECOND_FRAC à une nouvelle valeur courante égale au contenu du champ STS préalablement lu. Puis on passe à l'étape 610.

Dans l'étape 610, on horodate le paquet en fonction de la valeur courante des compteurs SECOND_INT et SECOND_FRAC.

Pour permettre à un récepteur de restituer l'horloge de référence d'un service (27 MHz) (par exemple pour calculer le débit du flux reçu), un compteur noté PCR (pour « Program Clock Reference » en anglais), est transmis dans le paquet PID indiqué dans la table PMT. Le PCR est incrémenté sur des périodes de 27 MHz, et est constitué de deux champs :

- PCR_base : compteur modulo $2^{33}$, incrémenté par périodes de 90 kHz ;
- PCR_extension: compteur modulo 300, incrémenté par périodes de 27 MHz.

On retrouve la valeur du PCR, en période de 27 MHz, avec la formule suivante :

$$PCR = PCR\_base * 300 + PCR\_extension.$$

Lorsqu'un flux secondaire (par exemple un flux régional) est inséré dans un flux principal (par exemple un flux national) de débit différent, le PCR des paquets du flux inséré doit être recalculé.

Pour ce faire, pour un paquet du flux inséré, on considère :

- l'heure $H_{in}$ indiquée par l'information d'horodatage $I_{in}$ associée à ce paquet en entrée (par application de la machine d'état de l'horodatage au flux secondaire),
- l'heure $H_{out}$ indiquée par l'information d'horodatage $I_{out}$ associée à ce paquet après insertion (par application de la machine d'état du procédé d'insertion d'un flux secondaire dans un flux principal).

La différence $\Delta$ entre les heures $H_{in}$ et $H_{out}$ est convertie en période de 27 MHz de la manière suivante :

$$\Delta = (H_{out} - H_{in}) * 27\ MHz.$$

A partir de cette différence $\Delta$ et du PCR initial du paquet considéré $PCR_{in}$, le PCR à remplacer ($PCR_{out}$) est calculé comme suit :

$$PCR_{out} = PCR_{in} + \Delta,$$

dont les parties « base » et « extension » se calculent de la façon suivante :

$$
\begin{array}{c|c}
PCR_{out} & 300 \\
\hline
PCR_{out}\_extension & PCR_{out}\_base
\end{array}
$$

De même, dans le cadre d'un flux DVB, la table de signalisation de modulation peut être modifiée, de façon à fournir un flux de débit modifié toujours conforme à la norme.

Ainsi, par exemple, si aucun service, ou composante, n'est retiré du flux initial, les caractéristiques de modulation devront être modifiées dans la table de signalisation « NIT ». Ces caractéristiques se trouvent dans le descripteur « Terrestrial_delivery_system ».

*6.3 Description d'exemples de mises en oeuvre de l'invention*

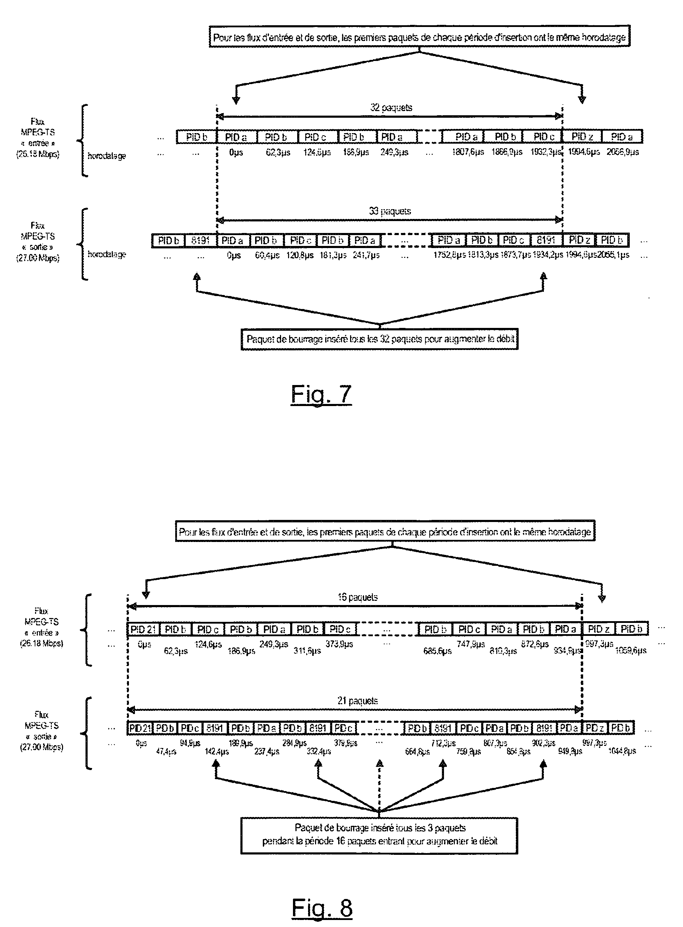

On présente maintenant, en relation avec les **figures 7 et 8,** deux exemples de modification du débit d'un flux de données d'origine, délivrant un flux de données modifié, de débit différent du flux de données d'origine.

Dans l'exemple de la figure 7, le débit du flux d'origine est de 26.18 Mbps et le débit souhaité pour le flux modifié est de 27.00 Mbps.

L'annexe 5, faisant partie intégrante de la présente description, présente les différentes caractéristiques de modulation des flux d'origine (flux d'entrée) et modifié (flux de sortie), ainsi que les durées des paquets et les récurrences des méga-trames pour les flux d'entrée et de sortie.

Avec ces informations, et selon la formule (2) précédemment décrite, la récurrence d'insertion de paquets, pour modifier le flux d'entrée, se calcule ainsi :

$$récurrence = \frac{27.0000 - 26.181818}{26.181818} = \frac{1}{32}$$

Dans cet exemple de la figure 7, les transraters chargés de modifier le débit du flux d'entrée doivent donc insérer dans le flux d'entrée 1 paquet tous les 32 paquets.

De cette manière, pour que le débit du flux de sortie soit supérieur à celui du flux d'entrée, 33 paquets sont transmis dans le flux de sortie, dans la même durée que celle nécessaire à la transmission de 32 paquets dans le flux d'entrée.

On note donc sur la figure 7 que l'horodatage du 34$^{ème}$ paquet dans le flux de sortie est identique à l'horodatage du 33$^{ème}$ paquet dans le flux d'entrée.

De plus, l'intervalle de garde du flux de sortie étant différent de celui du flux d'entrée (voir le tableau de l'annexe 5), les paquets MIP du flux d'entrée doivent être supprimés et remplacés par des nouveaux paquets MIP dans le flux de sortie, comme déjà expliqué précédemment.

Connaissant la récurrence (9072) des méga-trames dans le flux de sortie (voir le tableau de l'annexe 5), l'instant d'insertion (instant égal à 0 μs dans cet exemple, pour simplifier les calculs) des paquets MIP (indiqué dans le marqueur par le champ « MIP_time_insertion »), et la durée d'un paquet (60,44 μs), le transrater peut déterminer le paquet d'insertion du paquet MIP suivant :

$$9072 * 60,44 \ \mu s = 548352,0 \ \mu s$$

L'instant d'insertion d'un paquet MIP suivant le paquet MIP inséré à l'instant 0, correspond donc au paquet horodaté à 548352,0 μs dans le flux de sortie.

L'annexe 6, faisant partie intégrante de la présente description, présente un tableau indiquant les différentes valeurs des champs du paquet marqueur inséré dans le flux d'entrée, au fur et à mesure de son insertion dans le flux d'entrée, et en prenant comme référence l'horodatage de ce flux.

Pour les deux lignes en italique, le paquet horodaté à 548352 µs n'existe pas dans le flux d'entrée, mais existe dans le flux de sortie, et correspond à l'instant d'insertion du paquet MIP (tel que calculé ci-dessus).

L'exemple décrit en relation avec la figure 7 et les annexes 5 et 6 montre qu'à 0 µs, le début de la période de récurrence d'insertion des paquets pour modifier le flux et l'instant d'insertion des paquets MIP coïncident, et que cette coïncidence d'instants a lieu toutes les 18,095616 secondes, soit 33*548352 µs ou 9072 * (33 * 60,4444 µs).

Dans l'exemple de la figure 8, le débit du flux d'origine est de 26.18 Mbps et le débit souhaité pour le flux modifié est de 34.3636 Mbps, avec un intervalle de garde inchangé entre le flux d'entrée et le flux de sortie.

L'annexe 7, faisant partie intégrante de la présente description, présente les différentes caractéristiques de modulation des flux d'origine (flux d'entrée) et modifié (flux de sortie), ainsi que les durées des paquets et les récurrences des méga-trames pour les flux d'entrée et de sortie.

Avec ces informations, et selon la formule (2) précédemment décrite, la récurrence d'insertion de paquets, pour modifier le flux d'entrée, se calcule ainsi :

$$récurrence = \frac{34.363636 - 26.181818}{26.181818} = \frac{5}{16}$$

Dans cet exemple de la figure 7, les transraters chargés de modifier le débit du flux d'entrée doivent donc insérer dans le flux d'entrée 5 paquets tous les 16 paquets, de façon équi-répartie, par exemple un paquet inséré tous les 3 paquets pendant une période de 16 paquets.

Comme déjà indiqué dans l'exemple précédent, le 22ème paquet du flux de sortie a le même horodatage que le 17ème paquet du flux d'entrée.

Connaissant la récurrence (10584) des méga-trames dans le flux de sortie (voir le tableau de l'annexe 7), l'instant d'insertion (instant égal à 0 µs dans cet exemple, pour simplifier les calculs) des paquets MIP (indiqué dans le marqueur par le champ « MIP_time_insertion »), et la durée d'un paquet (47,492 µs), le transrater peut déterminer le paquet d'insertion du paquet MIP suivant :

$$10584 * 47,492 \text{ µs} = 502655,33 \text{ µs}$$

L'instant d'insertion d'un paquet MIP suivant le paquet MIP inséré à l'instant 0, correspond donc au paquet horodaté à 502655,33 µs dans le flux de sortie.

La **figure 9** présente la structure d'un dispositif d'horodatage et d'insertion (aussi appelé re-multiplexeur) selon un mode de réalisation particulier de l'invention, mettant par exemple en oeuvre la machine d'état de modification de flux, décrite ci-dessus en relation avec la figure 5.

Ce dispositif comprend une mémoire RAM 91, une unité de traitement 93, équipée par exemple d'un microprocesseur, et pilotée par un programme d'ordinateur stocké dans une mémoire ROM 92. A l'initialisation, les instructions de code du programme d'ordinateur sont par exemple chargées dans la mémoire RAM 90 avant d'être exécutées par le processeur de l'unité de traitement 93. L'unité de traitement 93 reçoit en entrée le flux principal A. Le microprocesseur de l'unité de traitement 93 recherche un marqueur dans le flux A et en extrait certaines informations, et horodate le flux A pour déterminer un paquet de début de modification dans le flux principal A afin d'obtenir un flux résultant B de débit modifié, selon les instructions de code du programme d'ordinateur chargées dans la mémoire RAM 91. L'unité de traitement 93 délivre en sortie le flux résultant B.

On notera que l'invention ne se limite pas à une implantation purement logicielle, sous la forme d'une séquence d'instructions d'un programme informatique, mais qu'elle peut aussi être mise en oeuvre sous forme matérielle ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

**ANNEXE** 1

| Syntaxe | Nombre de bits |
|---|---|
| multi_MIP_packet(){ | |

(suite)

| Syntaxe | Nombre de bits |
|---|---|
| transport_packet_header | 32 |
| data_length | 8 |
| For (i=0 ;i<N ;i++) {<br>    TPS_MIP<br>    MIP_time_insertion<br>    rfu<br>    MIP_continuity_counter<br>    packet_time_recurrence<br>    } | <br>32<br>48<br>4<br>4<br>48 |
| crc_32 | 32 |
| For (i=0 ;i<N ;i++){<br>    stuffing_byte<br>    }<br>} | <br>8 |

**transport_packet_header:** en-tête paquet identique à ce qui est demandé pour le paquet MIP hormis la valeur du PID donné par l'exploitation.

**data_length:** longueur du champ de donnée comprenant l'octet suivant ce champ et le dernier octet de CRC_32, il n'inclut pas les octets de bourrage.

**TPS_MIP** : ce champ donne les caractéristiques de modulation (voir la table 3 de la norme TS 101 191).

**Rfu** : réservé.

**MIP_time_insertion** : codé sur 48 bits, cette donnée indique l'heure d'insertion du paquet après modification du débit. Les 24 bits de poids fort donnent le temps en secondes entières modulo 24 heures et les 24 bits de poids faibles donne le temps en période de 100 ns comme le champ STS du paquet MIP.

**MIP_continuity_counter :** sera recopié dans l'en-tête paquet pour que tous les « transraters » du réseau SFN utilisent la même valeur.

**packet_time_recurrence :** codée de la même manière que MIP_ time_insertion, cette donnée indique le paquet du début de la récurrence pour effectuer le changement de débit.

ANNEXE 2

| | | | | Flux source | | | | |
|---|---|---|---|---|---|---|---|---|
| Intervalle de garde | | | | 1/32 | | | | |
| | Modulation | | | 64-QAM | | | | |
| | | FEC | | 1/2 | 2/3 | 3/4 | 5/6 | 7/8 |
| | | | Débit | 19,636364 | 26,181818 | 29,454545 | 32,727273 | 34,363636 |
| 1/4 | QPSK | 1/2 | 5,400000 | 2 7/11 | 3 28/33 | 4 5/11 | 5 2/33 | 54/11 |
| | | 2/3 | 7,200000 | 1 8/11 | 2 7/11 | 31/11 | 3 6/11 | 3 17/22 |
| | | 3/4 | 8,100000 | 1 14/33 | 2 23/99 | 27/11 | 3 4/99 | 3 8/33 |
| | | 5/6 | 9,000000 | 1 2/11 | 1 10/11 | 23/11 | 2 7/11 | 29/11 |
| | | 7/8 | 9,450000 | 1 6/77 | 1178/231 | 2 9/77 | 2107/231 | 2 7/11 |
| | 16-QAM | 1/2 | 10,800000 | 9/11 | 1 14/33 | 18/11 | 2 1/33 | 22/11 |
| | | 2/3 | 14,400000 | 4/11 | 9/11 | 1 1/22 | 1 3/11 | 1 17/44 |
| | | 3/4 | 16,200000 | 7/33 | 61/99 | 9/11 | 1 2/99 | 1 4/33 |
| | | 5/6 | 18,000000 | 1/11 | 5/11 | 7/11 | 9/11 | 10/11 |
| | | 7/8 | 18,900000 | 3/77 | 89/231 | 43/77 | 169/231 | 9/11 |
| | 64-QAM | 1/2 | 16,200000 | 7/33 | 61/99 | 9/11 | 1 2/99 | 1 4/33 |
| | | 2/3 | 21,600000 | 1/10 | 7/33 | 4/11 | 17/33 | 13/22 |
| | | 3/4 | 24,300000 | 19/80 | 23/297 | 7/33 | 103/297 | 41/99 |
| | | 5/6 | 27,000000 | 3/8 | 1/32 | 1/11 | 7/33 | 3/11 |
| | | 7/8 | 28,350000 | 71/160 | 53/640 | 3/77 | 107/693 | 7/33 |
| 1/8 | QPSK | 1/2 | 6,000000 | 2 3/11 | 3 4/11 | 310/11 | 45/11 | 48/11 |
| | | 2/3 | 8,000000 | 1 5/11 | 2 3/11 | 2 15/22 | 31/11 | 3 13/44 |
| | | 3/4 | 9,000000 | 1 2/11 | 1 10/11 | 23/11 | 2 7/11 | 29/11 |
| | | 5/6 | 10,000000 | 53/55 | 1 34/55 | 152/55 | 23/11 | 2 24/55 |
| | | 7/8 | 10,500000 | 67/77 | 1 38/77 | 1 62/77 | 2 9/77 | 23/11 |
| | 16-QAM | 1/2 | 12,000000 | 7/11 | 1 2/11 | 15/11 | 18/11 | 1 19/22 |
| | | 2/3 | 16,000000 | 5/22 | 7/11 | 37/44 | 1 1/22 | 1 13/88 |
| | | 3/4 | 18,000000 | 1/11 | 5/11 | 7/11 | 9/11 | 10/11 |
| | | 5/6 | 20,000000 | 1/54 | 17/55 | 26/55 | 7/11 | 79/110 |
| | | 7/8 | 21,000000 | 5/72 | 19/77 | 31/77 | 43/77 | 7/11 |
| | 64-QAM | 1/2 | 18,000000 | 1/11 | 5/11 | 7/11 | 9/11 | 10/11 |
| | | 2/3 | 24,000000 | 2/9 | 1/11 | 5/22 | 4/11 | 19/44 |
| | | 3/4 | 27,000000 | 3/8 | 1/32 | 1/11 | 7/33 | 3/11 |
| | | 5/6 | 30,000000 | 19/36 | 7/48 | 1/54 | 1/11 | 8/55 |
| | | 7/8 | 31,500000 | 29/48 | 13/64 | 5/72 | 3/77 | 1/11 |

(suite)

| | | | | Flux source | | | | |
|---|---|---|---|---|---|---|---|---|
| Intervalle de garde | | | | 1/32 | | | | |
| | Modulation | | | 64-QAM | | | | |
| | | FEC | | 1/2 | 2/3 | 3/4 | 5/6 | 7/8 |
| | | | Débit | 19,636364 | 26,181818 | 29,454545 | 32,727273 | 34,363636 |
| 1/16 | QPSK | 1/2 | 6,352941 | 2 1/11 | 3 4/33 | 3 7/11 | 4 5/33 | 4 9/22 |
| | | 2/3 | 8,470588 | 1 7/22 | 2 1/11 | 2 21/44 | 2 19/22 | 3 5/88 |
| | | 3/4 | 9,529412 | 1 2/33 | 1 74/99 | 2 1/11 | 2 43/99 | 2 20/33 |
| | | 5/6 | 10,588235 | 47/55 | 1 26/55 | 1 43/55 | 2 1/11 | 2 27/110 |
| | | 7/8 | 11,117647 | 59/77 | 1 82/231 | 1 50/77 | 1 218/231 | 2 1/11 |
| | 16-QAM | 1/2 | 12,705882 | 6/11 | 1 2/33 | 1 7/22 | 1 19/33 | 1 31/44 |
| | | 2/3 | 16,941176 | 7/44 | 6/11 | 65/88 | 41/44 | 1 5/176 |
| | | 3/4 | 19,058824 | 1/33 | 37/99 | 6/11 | 71/99 | 53/66 |
| | | 5/6 | 21,176471 | 4/51 | 13/55 | 43/110 | 6/11 | 137/220 |
| | | 7/8 | 22,235294 | 9/68 | 41/231 | 25/77 | 109/231 | 6/11 |
| | 64-QAM | 1/2 | 19,058824 | 1/33 | 37/99 | 6/11 | 71/99 | 53/66 |
| | | 2/3 | 25,411765 | 5/17 | 1/33 | 7/44 | 19/66 | 31/88 |
| | | 3/4 | 28,588235 | 31/68 | 25/272 | 1/33 | 43/297 | 20/99 |
| | | 5/6 | 31,764706 | 21/34 | 29/136 | 4/51 | 1/33 | 9/110 |
| | | 7/8 | 33,352941 | 95/136 | 149/544 | 9/68 | 13/680 | 1/33 |
| 1/32 | QPSK | 1/2 | 6,545455 | 2 | 3 | 3 1/2 | 4 | 4 1/4 |
| | | 2/3 | 8,727273 | 1 1/4 | 2 | 2 3/8 | 2 3/4 | 2 15/16 |
| | | 3/4 | 9,818182 | 1 | 1 2/3 | 2 | 2 1/3 | 2 1/2 |
| | | 5/6 | 10,909091 | 4/5 | 1 2/5 | 1 7/10 | 2 | 2 3/20 |
| | | 7/8 | 11,454545 | 5/7 | 1 2/7 | 1 4/7 | 1 6/7 | 2 |
| | 16-QAM | 1/2 | 13,090909 | 1/2 | 1 | 1 1/4 | 1 1/2 | 1 5/8 |
| | | 2/3 | 17,454545 | 1/8 | 1/2 | 11/16 | 7/8 | 31/32 |
| | | 3/4 | 19,636364 | 0 | 1/3 | 1/2 | 2/3 | 3/4 |
| | | 5/6 | 21,818182 | 1/9 | 1/5 | 7/20 | 1/2 | 23/40 |
| | | 7/8 | 22,909091 | 1/6 | 1/7 | 2/7 | 3/7 | 1/2 |
| | 64-QAM | 1/2 | 19,636364 | 0 | 1/3 | 1/2 | 2/3 | 3/4 |
| | | 2/3 | 26,181818 | 1/3 | 0 | 1/8 | 1/4 | 5/16 |
| | | 3/4 | 29,454545 | 1/2 | 1/8 | 0 | 1/9 | 1/6 |
| | | 5/6 | 32,727273 | 2/3 | 1/4 | 1/9 | 0 | 1/20 |
| | | 7/8 | 34,363636 | 3/4 | 5/16 | 1/6 | 1/20 | 0 |

**ANNEXE 3**

Tableau des récurrences des méga-trames donné par la norme TS 101 191 :

| | Bande passante | | | |
|---|---|---|---|---|
| Intervalle de garde | 8 MHz | 7 MHz | 6 MHz | 5 MHz |
| 1/32 | 0,502656 s | 0,574464 s | 0,6702080 s | 0,8042496 s |
| 1/16 | 0,517888 s | 0,591872 s | *0,6905173 s* | 0,8286208 s |
| 1/8 | 0,548352 s | 0,626688 s | 0,7311360 s | 0,8773633 s |
| 1/4 | 0,609280 s | 0,696320 s | *0,8123733* s | 0,9748480 s |
| NOTE : valeurs approchées en *italique* | | | | |

## ANNEXE 4

Tableau récapitulant la récurrence (en paquet) des méga-trames selon le débit choisi pour des paquets de 204 octets et une bande passante de 8MHz.

| | | | | Récurrence en paquet des méga-trames | | | |
|---|---|---|---|---|---|---|---|
| Intervalle de garde | Modulation | FEC | Rate | 1/4 | 1/8 | 1/16 | 1/32 |
| | | | | 0,609280 | 0,548352 | 0,517888 | 0,502656 |
| 1/32 | QPSK | 1/2 | 6,545455 | 2443,636364 | 2199,272727 | 2077,090909 | **2016** |
| | | 2/3 | 8,727273 | 3258,181818 | 2932,363636 | 2769,454545 | **2688** |
| | | 3/4 | 9,818182 | 3665,454545 | 3298,909091 | 3115,636364 | **3024** |
| | | 5/6 | 10,909091 | 4072,727273 | 3665,454545 | 3461,818182 | **3360** |
| | | 7/8 | 11,454545 | 4276,363636 | 3848,727273 | 3634,909091 | **3528** |
| | 16-QAM | 1/2 | 13,090909 | 4887,272727 | 4398,545455 | 4154,181818 | **4032** |
| | | 2/3 | 17,454545 | 6516,363636 | 5864,727273 | 5538,909091 | **5376** |
| | | 3/4 | 19,636364 | 7330,909091 | 6597,818182 | 6231,272727 | **6048** |
| | | 5/6 | 21,818182 | 8145,454545 | 7330,909091 | 6923,636364 | **6720** |
| | | 7/8 | 22,909091 | 8552,727273 | 7697,454545 | 7269,818182 | **7056** |
| | 64-QAM | 1/2 | 19,636364 | 7330,909091 | 6597,818182 | 6231,272727 | **6048** |
| | | 2/3 | 26,181818 | 9774,545455 | 8797,090909 | 8308,363636 | **8064** |
| | | 3/4 | 29,454545 | 10996,36364 | 9896,727273 | 9346,909091 | **9072** |
| | | 5/6 | 32,727273 | 12218,18182 | 10996,36364 | 10385,45455 | **10080** |
| | | 7/8 | 34,363636 | 12829,09091 | 11546,18182 | 10904,72727 | **10584** |
| 1/16 | QPSK ... | 1/2 | 6,352941 | 2371,764706 | 2134,588235 | **2016** | 1956,705882 |
| | | ... | ... | ... | ... | ... | ... |

## ANNEXE 5

| | Taille Paquet | Bande passante | Modulation | FEC | Intervalle de garde | | Débit (Mbps) | Durée paquet (μs) | Récurrence méga-trame (Paquet) |
|---|---|---|---|---|---|---|---|---|---|
| Flux d'entrée | 204 | 8 | 64-QAM | 2/3 | 1/32 | ⇒ | 26.1818 | 62,3333 | 8064 |

(suite)

|  | Taille Paquet | Bande passante | Modulation | FEC | Intervalle de garde |  | Débit (Mbps) | Durée paquet ($\mu$s) | Récurrence méga-trame (Paquet) |
|---|---|---|---|---|---|---|---|---|---|
| Flux de sortie | 204 | 8 | 64-QAM | 3/4 | 1/8 | $\Rightarrow$ | 27.0000 | 60,4444 | 9072 |

## ANNEXE 6

| Horodatage du flux original (Si le PID de marquage est inséré entre...) | MIP time insertion | MIP continuity counter | Packet time récurrence |
|---|---|---|---|
| Avant 0 $\mu$s | 0x000000 000000 (0,0s) | 0 | 0x000000 000000 (0,0s) |
| 0 $\mu$s $\leq$ H < 1994,6 $\mu$s | 0x000000 53AC00 (0,5483520s) | 1 | 0x000000 004DEA (0,0019946s) |
| 1994,6 $\mu$s $\leq$ H < 3989,3 $\mu$s | 0x000000 53AC00 (0,5483520s) | 1 | 0x000000 009BD5 (0,0039893s) |
| 3989,3 $\mu$s $\leq$ H < 5983,9 $\mu$s | 0x000000 53AC00 (0,5483520s) | 1 | 0x000000 00E9BF (0,0059839s) |
| ... | ... | ... | ... |
| 542549,3 $\mu$s $\leq$ H < 544543,9 $\mu$s | 0x000000 53AC00 (0,5483520s) | 1 | 0x000000 53173F (0,5445439s) |
| 544543.9 $\mu$s $\leq$ H < 546538,6 $\mu$s | 0x000000 53AC00 (0,5483520s) | 1 | 0x000000 53652A (0,5465386s) |
| 546538,6 $\mu$s $\leq$ H $\leq$ 548352,0 $\mu$s | 0x000000 53AC00 (0,5483520s) | 1 | 0x000000 53B315 (0,5485333s) |
| 548352,0 $\mu$s < H < 548533,3 $\mu$s | 0x000000 53AC00 (0,5483520s) | 2 | 0x000000 53B315 (0,5485333s) |
| 548533,3 $\mu$s $\leq$ H < 550527,9 $\mu$s | 0x000001 0EC180 (1,0967040s) | 2 | 0x000000 5400FF (0,5505279s) |
| 550527,9 $\mu$s $\leq$ H < 552522,6 | 0x000001 0EC180 (1,0967040s) | 2 | 0x000000 544EEA (0,5525226s) |

## ANNEXE 7

|  | Taille Paquet | Bande passante | Modulation | FEC | Intervalle de garde |  | Débit (Mbps) | Durée paquet $\mu$s) | Récurrence méga-trame (Paquet) |
|---|---|---|---|---|---|---|---|---|---|
| Flux d'entrée | 204 | 8 | 64-QAM | 2/3 | 1/32 | $\Rightarrow$ | 26.1818 | 62,3333 | 8064 |
| Flux de sortie | 204 | 8 | 64-QAM | 7/8 | 1/32 | $\Rightarrow$ | 34,3636 | 47,492 | 10584 |

**Revendications**

1. Procédé de modification du débit d'un flux de données d'origine organisé en paquets successifs, ledit procédé étant **caractérisé en ce qu'**il comprend les étapes suivantes :

   - recherche d'au moins un marqueur présent dans ledit flux de données d'origine ;
   - extraction d'au moins une information d'instant de début de récurrence portée par ledit marqueur ;
   - détermination, pour chacun desdits paquets dudit flux de données d'origine, d'une information d'horodatage ;
   - détermination, à partir de ladite information d'instant de début de récurrence et d'au moins une desdites informations d'horodatage, d'un paquet de début de récurrence dans ledit flux de données d'origine ;
   - modification dudit flux de données d'origine par insertion ou suppression d'au moins un paquet déterminé à partir dudit paquet de début de récurrence déterminé, délivrant un flux de données modifié.

2. Procédé selon la revendication 1, **caractérisé en ce que** ladite étape d'extraction délivre également une information de récurrence de modification et/ou un nombre de paquets à retirer ou à insérer portée par ledit marqueur.

3. Procédé selon l'une quelconque des revendications 1 à 2, **caractérisé en ce que** ledit marqueur est un paquet identifié par un identifiant (PID) de type propriétaire.

4. Procédé selon l'une quelconque des revendications 1 à 3, **caractérisé en ce que** ledit flux de données modifié est un flux devant être diffusé par au moins un émetteur d'un réseau de diffusion de type SFN, dans lequel chacun desdits émetteurs utilise une même fréquence d'émission des données du flux de données modifié.

5. Procédé selon la revendication 4, **caractérisé en ce que** ladite étape d'extraction délivre également au moins une information portée par ledit marqueur appartenant au groupe comprenant :

   - des caractéristiques de modulation ;
   - un instant d'insertion d'un paquet d'initialisation de méga-trame (MIP) ;
   - une valeur d'un champ (« continuity-counter ») d'un paquet d'initialisation de méga-trame (MIP).

6. Procédé selon la revendication 5, lesdits paquets successifs dudit flux de données d'origine et dudit flux de données modifié étant eux-mêmes organisés en au moins une méga-trame, chaque méga-trame comprenant un paquet d'initialisation de méga-trame (MIP), **caractérisé en ce qu'**il comprend en outre les étapes suivantes :

   - mise à jour ou détermination, pour chacun desdits paquets dudit flux de données modifié suivant ledit paquet de début de récurrence, d'une information d'horodatage ;
   - génération d'un paquet d'initialisation de méga-trame (MIP) à partir d'au moins une desdites informations délivrées par ladite étape d'extraction ;
   - insertion dudit paquet d'initialisation de méga-trame (MIP) généré dans ledit flux de données modifié, à partir d'au moins une desdites informations d'horodatage et de ladite information d'instant d'insertion délivré par ladite étape d'extraction.

7. Procédé selon l'une quelconque des revendications 4 à 6, **caractérisé en ce que** ladite étape de détermination d'une information d'horodatage comprend, pour chacun desdits paquets dudit flux de données d'origine, les étapes suivantes :

   - détermination de la durée dudit paquet, à partir d'une taille déterminée dudit paquet et d'un débit déterminé dudit flux de données d'origine ;
   - si ledit paquet est un paquet transportant une table de date et heure (table TDT), obtention d'une première information temporelle (UTC_time) contenue dans ladite table de date et heure (table TDT) ;
   - si ledit paquet est un premier paquet d'une méga-trame, obtention d'une seconde information temporelle (STS) contenue dans un paquet d'initialisation de méga-trame (MIP) préalablement reçu ;
   - horodatage dudit paquet en fonction de la durée dudit paquet et desdites première et seconde informations temporelles.

8. Procédé selon la revendication 7, **caractérisé en ce que** ladite étape d'horodatage comprend les sous-étapes suivantes :

- incrémentation d'un premier compteur temporel, permettant de compter des fractions de seconde (SECOND_ FRAC), avec la durée déterminée dudit paquet, pour obtenir une valeur incrémentée du premier compteur ;

- si ladite valeur incrémentée du premier compteur est supérieure ou égale à une valeur maximale prédéterminée, réinitialisation du premier compteur avec une nouvelle valeur courante égale à ladite valeur incrémentée moins ladite valeur maximale prédéterminée, et incrémentation d'une unité d'un second compteur temporel (SECOND_ INT), permettant de compter des secondes ;

- si ledit paquet est un paquet transportant une table de date et heure (table TDT), réinitialisation du second compteur temporel à une nouvelle valeur courante fonction de ladite première information temporelle (UTC_ time) contenue dans ladite table de date et heure ;

- si ledit paquet est un premier paquet d'une méga-trame, réinitialisation du premier compteur temporel à une nouvelle valeur courante fonction de ladite seconde information temporelle (STS) contenue dans ledit paquet d'initialisation de méga-trame (MIP) préalablement reçu ;

- détermination d'une information d'horodatage dudit paquet en fonction de la valeur courante des premier et second compteurs.

**9.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé de modification du débit d'un flux selon au moins une des revendications 1 à 8.

**10.** Dispositif de modification du débit d'un flux de données d'origine organisé en paquets successifs, ledit dispositif étant **caractérisé en ce qu'**il comprend :

- des moyens de recherche d'au moins un marqueur présent dans ledit flux de données d'origine ;
- des moyens d'extraction d'au moins une information d'instant de début de récurrence portée par ledit marqueur ;
- des moyens de détermination, pour chacun desdits paquets dudit flux de données d'origine, d'une information d'horodatage ;
- des moyens de détermination, à partir de ladite information d'instant de début de récurrence et d'au moins une desdites informations d'horodatage, d'un paquet de début de récurrence dans ledit flux de données d'origine ;
- des moyens de modification dudit flux de données d'origine par insertion ou suppression d'au moins un paquet déterminé à partir dudit paquet de début de récurrence déterminé, délivrant un flux de données modifié.

**11.** Procédé de diffusion d'un flux de données d'origine organisé en paquets successifs comprenant les étapes de l'un des procédés modification du débit d'un flux de données d'origine selon l'une des revendications 1 à 8, le flux comprenant au moins un marqueur qui porte au moins une information d'instant de début de récurrence.

**12.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé de diffusion d'un flux selon la revendication 11.

**13.** Tête de réseau comprenant tous les moyens pour diffuser selon le procédé de diffusion de la revendication 11 un flux de données d'origine organisé en paquets successifs comprenant au moins un marqueur et qui porte au moins une information d'instant de début de récurrence.

**Claims**

**1.** Process for modifying the throughput of a stream of source data which is organised in successive packets, said process being **characterised in that** it comprises the following steps:

- searching for at least one marker which is present in said stream of source data;
- extracting at least one item of information relating to time of start of recurrence, which is carried by said marker;
- determining, for each of said packets of said stream of source data, an item of timestamp information;
- determining, from said item of information relating to time of start of recurrence and from at least one of said items of timestamp information, a packet of start of recurrence in said stream of source data;
- modifying said stream of source data by insertion or deletion of at least one packet determined from said determined packet of start of recurrence, outputting a modified stream of data.

**2.** Process according to Claim 1, **characterised in that** said extracting step also outputs an item of information relating to recurrence of modification and/or a number of packets to be removed or inserted, carried by said marker.

**3.** Process according to either one of Claims 1 to 2, **characterised in that** said marker is a packet identified by an identifier (PID) of proprietary type.

**4.** Process according to any one of Claims 1 to 3, **characterised in that** said modified stream of data is a stream having to be broadcast by at least one transmitter pertaining to a broadcasting network of SFN type in which each of said transmitters utilises the same frequency of transmission of the data of the modified stream of data.

**5.** Process according to Claim 4, **characterised in that** said extracting step also outputs at least one item of information carried by said marker pertaining to the group comprising:

- modulation characteristics;
- a time of insertion of a megaframe initialisation packet (MIP);
- a value of a field (continuity-counter) of a megaframe initialisation packet (MIP).

**6.** Process according to Claim 5, said successive packets of said stream of source data and of said modified stream of data being themselves organised in at least one megaframe, each megaframe including a megaframe initialisation packet (MIP), **characterised in that** it further includes the following steps:

- updating or determining, for each of said packets of said modified stream of data following said packet of start of recurrence, an item of timestamp information;
- generating a megaframe initialisation packet (MIP) from at least one of said items of information output by said extracting step;
- inserting said megaframe initialisation packet (MIP) generated in said modified stream of data from at least one of said items of timestamp information and from said item of information relating to time of insertion output by said extracting step.

**7.** Process according to any one of Claims 4 to 6, **characterised in that** said step of determining an item of timestamp information comprises, for each of said packets of said stream of source data, the following steps:

- determining the duration of said packet from a determined size of said packet and from a determined throughput of said stream of source data;
- if said packet is a packet conveying a time-and-date table (TDT), obtaining a first item of temporal information (UTC_time) contained in said time-and-date table (TDT);
- if said packet is a first packet of a megaframe, obtaining a second item of temporal information (STS) contained in a megaframe initialisation packet (MIP) received previously;
- time stamping said packet as a function of the duration of said packet and of said first and second items of temporal information.

**8.** Process according to Claim 7, **characterised in that** said time stamping step comprises the following sub-steps:

- incrementing a first time-counter, enabling fractions of a second (SECOND_FRAC) to be counted, with the determined duration of said packet, in order to obtain an incremented value of the first counter;
- if said incremented value of the first counter is greater than or equal to a predetermined maximum value, re-initialising the first counter with a new current value equal to said incremented value minus said predetermined maximum value, and incrementing a unit of a second time-counter (SECOND_INT), enabling seconds to be counted;
- if said packet is a packet conveying a time-and-date table (TDT), re-initialising the second time-counter to a new current value as a function of said first item of temporal information (UTC_time) contained in said time-and-date table;
- if said packet is a first packet of a megaframe, re-initialising the first time-counter to a new current value as a function of said second item of temporal information (STS) contained in said megaframe initialisation packet (MIP) received previously;
- determining an item of timestamp information of said packet as a function of the current value of the first and second counters.

9. Computer-program product, downloadable from a communications network and/or stored on a computer-readable medium and/or executable by a microprocessor, **characterised in that** it comprises program-code instructions for implementation of the steps of the process for modifying the throughput of a stream according to at least one of Claims 1 to 8.

10. Device for modifying the throughput of a stream of source data which is organised in successive packets, said device being **characterised in that** it comprises:

- means for searching for at least one marker which is present in said stream of source data;
- means for extracting at least one item of information relating to time of start of recurrence, which is carried by said marker;
- means for determining, for each of said packets of said stream of source data, an item of timestamp information;
- means for determining, from said item of information relating to start of recurrence and from at least one of said items of timestamp information, a packet of start of recurrence in said stream of source data;
- means for modifying said stream of source data by insertion or deletion of at least one packet determined from said determined packet of start of recurrence, outputting a modified stream of data.

11. Process for broadcasting a stream of source data which is organised in successive packets, comprising the steps of one of the processes for modifying the throughput of a stream of source data according to one of Claims 1 to 8, the stream including at least one marker which carries at least one item of information relating to time of start of recurrence.

12. Computer-program product, downloadable from a communications network and/or stored on a computer-readable medium and/or executable by a microprocessor, **characterised in that** it comprises program-code instructions for implementation of the steps of the process for broadcasting a stream according to Claim 11.

13. Head end comprising all the means for broadcasting, in accordance with the broadcasting process of Claim 11, a stream of source data which is organised in successive packets including at least one marker which carries at least one item of information relating to time of start of recurrence.

**Patentansprüche**

1. Verfahren zur Änderung der Durchsatzmenge eines Ausgangsdatenstroms, der in aufeinander folgenden Paketen organisiert ist, wobei das Verfahren **dadurch gekennzeichnet ist, dass** es die folgenden Schritte umfasst:

- Suche nach mindestens einem Marker, der in dem Ausgangsdatenstrom vorhanden ist;
- Entnahme mindestens einer vom Marker getragenen Information eines Moments der beginnenden Wiederkehr
- Bestimmung einer Zeitstempelinformation für jedes der Pakete des Ausgangsdatenstroms;
- Bestimmung eines Wiederkehrbeginnpakets im Ausgangsdatenstrom auf Basis der Information des Moments der beginnenden Wiederkehr und mindestens einer der Zeitstempelinformationen;
- Änderung des Ausgangsdatenstroms durch Einsetzen oder Weglassen mindestens eines bestimmten Pakets aus dem bestimmten Wiederkehrbeginnpaket, wodurch ein geänderter Datenstrom geliefert wird.

2. Verfahren nach Anspruch 1, **dadurch gekennzeichnet, dass** der Schritt der Informationsentnahme auch eine Wiederkehr-Änderungsinformation und/oder eine Anzahl von zu entnehmenden oder einzusetzenden Paketen liefert, die vom Marker getragen werden.

3. Verfahren nach einem der Ansprüche 1 bis 2, **dadurch gekennzeichnet, dass** der Marker ein Paket ist, das durch einen Identifikator (PID) vom Typ Eigentümeridentifikator identifiziert ist.

4. Verfahren nach einem der Ansprüche 1 bis 3, **dadurch gekennzeichnet, dass** der geänderte Datenstrom ein Strom ist, der von mindestens einem Sender eines Übertragungsnetzes des Typs SFN verbreitet werden muss, in welchem jeder der Sender eine selbe Sendefrequenz der Daten des geänderten Datenstroms verwendet.

5. Verfahren nach Anspruch 4, **dadurch gekennzeichnet, dass** der Entnahmeschritt auch mindestens eine Information liefert, die von dem Marker getragen wird, gehörig zur folgenden Gruppe, umfassend:

- Modulationsmerkmale;
- einen Moment des Einsetzens eines Mega-Raster-Initialisierungspakets (MIP);
- einen Feldwert ("continuity-counter") eines Mega-Raster-Initialisierungspakets (MIP).

6. Verfahren nach Anspruch 5, wobei die aufeinander folgenden Pakete des Ausgangsdatenstroms und des geänderten Datenstroms selbst in mindestens einem Mega-Raster organisiert sind, wobei jeder Mega-Raster ein Mega-Raster-Initialisierungspaket (MIP) umfasst, **dadurch gekennzeichnet, dass** es ferner die folgenden Schritte umfasst:

- Aktualisierung oder Bestimmung für jedes der Pakete des geänderten Datenstroms nach dem Wiederkehrbeginnpaket einer Zeitstempelinformation;
- Erzeugung eines Mega-Raster-Initialisierungspakets (MIP) aus mindestens einer der im Entnahmeschritt gelieferten Informationen;
- Einsetzen des Mega-Raster-Initialisierungspakets (MIP), das in dem geänderten Datenstrom erzeugt wird, auf Basis mindestens einer der Zeitstempelinformationen und der Einsetzmomentinformation, die im Entnahmeschritt geliefert wird.

7. Verfahren nach einem der Ansprüche 4 bis 6, **dadurch gekennzeichnet, dass** der Schritt der Bestimmung einer Zeitstempelinformation für jedes der Pakete des Ausgangsdatenstroms die folgenden Schritte umfasst:

- Bestimmung der Dauer des Pakets aus einer bestimmten Größe des Pakets und einer bestimmten Durchsatzmenge des Ausgangsdatenstroms;
- Erhalt einer ersten Zeitinformation (UTC_time), wenn das Paket ein Paket ist, das eine Datums- und Zeittabelle (Tabelle TDT) transportiert, die in der Datums- und Zeittabelle (Tabelle TDT) enthalten ist;
- Erhalt einer zweiten Zeitinformation (STS), wenn das Paket ein erstes Paket eines Mega-Rasters ist, die in einem Mega-Raster-Initialisierungspaket (MIP) enthalten ist, das vorher empfangen wurde,
- Zeitstempelung des Pakets in Abhängigkeit von der Dauer des Pakets und der ersten und zweiten Zeitinformation.

8. Verfahren nach Anspruch 7, **dadurch gekennzeichnet, dass** der Zeitstempelungsschritt die folgenden Unterschritte umfasst:

- Takten eines ersten Zeitzählers, der es ermöglicht, Sekundenbruchteile (SECOND_FRAC) mit der bestimmten Dauer des Pakets zu zählen, um einen getakteten Wert des ersten Zählers zu erhalten;
- Wiederinitialisierung des ersten Zählers mit einem neuen laufenden Wert gleich dem getakteten Wert minus dem vorbestimmten Maximalwert, wenn der getaktete Wert des ersten Zählers größer oder gleich einem vorbestimmten Maximalwert ist, und Takten einer Einheit eines zweiten Zeitzählers (SECOND_INT), der es ermöglicht, Sekunden zu zählen;
- Wiederinitialisierung des zweiten Zeitzählers auf einen neuen laufenden Wert, der von der zweiten Zeitinformation (STS) abhängt, die in dem Mega-Raster-Initialisierungspaket (MIP), das vorher empfangen wurde, enthalten ist, wenn das Paket ein Paket ist, das eine Datums- und Zeittabelle (Tabelle TDT) transportiert;
- Bestimmung einer Zeitstempelinformation des Pakets in Abhängigkeit vom laufenden Wert des ersten und des zweiten Zählers.

9. Von einem Kommunikationsnetz herunterladbares und/oder auf einem Leseträger von einem Computer gespeichertes und/oder von einem Mikroprozessor ausführbares Computerprogrammprodukt, **dadurch gekennzeichnet, dass** es Programmcodebefehle für die Durchführung der Schritte des Verfahrens zur Änderung der Durchsatzmenge eines Stromes nach mindestens einem der Ansprüche 1 bis 8 umfasst.

10. Vorrichtung zur Änderung der Durchsatzmenge eines Ausgangsdatenstroms, der in aufeinanderfolgenden Paketen organisiert ist, wobei die Vorrichtung **dadurch gekennzeichnet ist, dass** sie umfasst:

- Mittel zur Suche nach mindestens einem Marker, der in dem Ausgangsdatenstrom vorhanden ist;
- Mittel zur Entnahme mindestens einer Information eines Moments der beginnenden Wiederkehr, die vom Marker getragen wird;
- für jedes der Pakete des Ausgangsdatenstroms Mittel zur Bestimmung einer Zeitstempelinformation;
- auf Basis der Information des Moments der beginnenden Wiederkehr und mindestens einer der Zeitstempelinformationen Mittel zur Bestimmung eines Wiederkehrbeginnpakets im Ausgangsdatenstrom;
- Mittel zur Änderung des Ausgangsdatenstroms durch Einsetzen oder Weglassen mindestens eines bestimmten Pakets aus dem bestimmten Wiederkehrbeginnpaket, wodurch ein geänderter Datenstrom geliefert wird.

11. Verfahren zur Übertragung eines Ausgangsdatenstroms, der r i n aufeinanderfolgenden Paketen organisiert ist, umfassend die Schritte eines der Verfahren zur Änderung der Durchsatzmenge eines Ausgangsdatenstroms nach einem der Ansprüche 1 bis 8, wobei der Fluss mindestens einen Marker umfasst, der mindestens eine Information des Moments einer beginnenden Wiederkehr trägt.

12. Von einem Kommunikationsnetz herunterladbares und/oder auf einem Leseträger von einem Computer gespeichertes und/oder von einem Mikroprozessor ausführbares Computerprogrammprodukt, **dadurch gekennzeichnet, dass** es Programmcodebefehle für die Durchführung der Schritte des Verfahrens zur Übertragung eines Stroms nach Anspruch 11 umfasst.

13. Koppeln eines Netzes, umfassend alle Mittel, um gemäß dem Übertragungsverfahren nach Anspruch 11 einen Ausgangsdatenstrom zu verbreiten, der in aufeinanderfolgenden Paketen organisiert ist, umfassend mindestens einen Marker, der mindestens eine Information des Moments einer beginnenden Wiederkehr trägt.

Fig. 1

Fig. 2

Fig. 3A

Fig. 3B

Fig. 4

Flux

| | | | |
|---|---|---|---|
| 51 | Décodage marqueur | Horodatage flux | 52 |

Détermination paquet début récurrence — 53

Modification débit flux — 54

Flux modifé

## Fig. 5

93

A → | P | → B

| | | |
|---|---|---|
| 91 | M | |
| | | Pg — 92 |

## Fig. 9

Fig. 6

## EP 2 345 250 B1

**Fig. 7**

**Fig. 8**

**EP 2 345 250 B1**

## RÉFÉRENCES CITÉES DANS LA DESCRIPTION

**Documents brevets cités dans la description**

- US 20070076764 A1
- US 20040008736 A